# EUROPÄISCHE PATENTSCHRIFT

(11) **EP 1 371 469 B1**
(45) Veröffentlichungstag und Bekanntmachung des Hinweises auf die Patenterteilung: **22.03.2006**
(21) Anmeldenummer: 03010530.8
(22) Anmeldetag: 10.05.2003
(51) Int. Cl.: B29C 44/32, B29C 44/34

(54) **Verfahren zur Herstellung eines wärmeisolierten Leitungsrohres**
Method of manufacturing a heat insulated pipe
Procédé pour la fabrication d'un tuyau isolé thermiquement

(30) Priorität: 12.06.2002 DE 10226041
(43) Veröffentlichungstag der Anmeldung: 17.12.2003
(73) Patentinhaber: BRUGG Rohr AG, Holding, 5200 Brugg (CH)
(72) Erfinder: Oeschger, Alfred, 5276 Will (AG) (CH); Schnell, Urs, 5242 Lupfig (CH)

(56) Entgegenhaltungen:
- WO-A-00/24813
- DE-A- 19 524 434
- DE-A- 19 629 678
- DE-A- 19 708 570
- US-A- 4 211 523
- US-A- 6 127 442

## Beschreibung

Die Erfindung betrifft ein Verfahren zur Herstellung eines wärmeisolierten Leitungsrohres nach dem Oberbegriff des Anspruchs 1.

Aus der DE 196 29 678 Al ist ein Verfahren zur Herstellung eines wärmeisolierten Leitungsrohres bekannt, bei welchem zumindest ein Innenrohr von einer zu einem Schlauch geformten Kunststoffolie unter Bildung eines ringspaltförmigen Hohlraums umhüllt wird und in den Hohlraum ein aufschäumbares Kunststoffgemisch auf der Basis von Polyurethan eingegeben wird, welches den Hohlraum vollständig unter Bildung eines wärmeisolierenden Schaumstoffes ausfüllt. Auf die Kunststoffolie wird ein Außenrohr aus einem thermoplastischen Kunststoff als mechanische Schutzschicht aufextrudiert. Bei diesem bekannten Verfahren werden die miteinander vermischten Komponenten des Polyurethanschaums-Polyol und Isocyanat einer Spritzpistole zugeführt, welche die miteinander vermischten Komponenten in den Hohlraum einspritzt. Die Komponenten Polyol und Isocyanat werden in Behältern angeliefert, aus denen das Polyol und Isocyanat jeweils getrennt voneinander einer Mischvorrichtung zugeleitet werden dort vermischt und das Gemisch an die Spritzpistole weitergeleitet wird.

Um die Isolierwirkung des Polyurethanschaums zu verbessern hat man bereits die bisher in den Poren des Schaumstoffes befindliche Luft durch hologenierte Kohlenwasserstoffe ersetzt, in dem man dem Schaumstoffgemisch vor dem Aufschäumen die halogenierten Kohlenwasserstoffe zusetzte. Diese halogenierten Kohlenwasserstoffe z. B. das unter dem Handelsnamen bekanntgewordene Frigen sind jedoch aus Umweltgründen bedenklich, weil sie vermutlich die Ozonschicht zerstören.

Auf der Suche nach Ersatzstoffen ist man auf nicht hologenierte Kohlenwasserstoffe wie beispielsweise U-Pentan, Cyclopentan und andere gestoßen, die annähernd zu einem Schaum mit gleichen Eigenschaffen führen.

Aus der DE 197 08 570 ist ein Verfahren zur Herstellung von Schaumstoffen bekannt, welche als Material zur Wärmedämmung in Rohrleitungen eingesetzt werden können. Der Schaumstoff wird durch Umsetzen von Polyisocyanaten, gegenüber Isocyanaten reaktiven Verbindungen mit einem Molekulargewicht von 500 bis 8000 g/mol in Gegenwart von Treibmitteln und Katalysatoren erzeugt, bei dem. Treibmittel enthaltende Kohlenwasserstoffe mit C₃- oder C₄- Ringen eingesetzt werden, die einen Siedepunkt zwischen 0 °C und 75 °C bei einem Druck von 1013 mbar aufweisen. Die Herstellung der Schaumstoffe wird im Labormaßstab nicht jedoch im großtechnischen Maßstab beschrieben.

Die US-A-6127442 offenbart ein Verfahren zur kontinuierlichen Herstellung von Polyurethanbfockschaum unter Einsatz von physikafisch unter Druck gelöstem Kohlendioxid als Treibmittel. Das Kohlendioxid wird in der Polyolkomponente und Luft oder Stickstoff in der Isocyanatkomponente gelöst. Beide Komponenten werden einer Mischkammer zugeführt. Die Mischkammer 3 ist ein Rührwerksmischkopf. Das CO₂ wird dem Polyol zugegeben und die beiden Komponenten in einem Statikmischer vermischt. Die Luft wird der isocyanatkomponenten beigefügt und mit dem Isocyanat in einem Statikmischer vermischt. In dem Statikmischer erfolgt bereits eine innige Durchmischung. Das in der Mischkammer vermischte Gut gelangt dann in ein Entspannungsorgan, in welcher die Reaktivgemische auf Umgebungsdruck entspannt werden.

Der vorliegenden Erfindung liegt die Aufgabe zugrunde das eingangs erwähnte Verfahren zur Herstellung wärmeisolierter Leitungsrohre dahingehend zu verbessern, daß ausgehend vom bekannten Stand der Technik dieses kostengünstig durchgeführt werden kann und zu einer Wärmedämmschicht in dem Leitungsrohr mit verbesserten Wärmedämmeigenschaften führt. Eine engere Aufgabe besteht darin, daß das Treibmittel sowie Luft genauestens in geringen Mengen zudosiert werden können.

Diese Aufgabe wird durch die im Kennzeichen des Anspruchs 1 erfaßten Merkmale gelöst.

Neben den sich aus der Aufgabenstellung direkt ergebenden Vorteilen werden durch die erfindungsgemäßen Maßnahmen noch folgende Vorteile erzielt:
die zu dosierenden Anteile können jederzeit verändert werden,
die Polyolkomponente kann jederzeit gewechselt werden,
die Investitionskosten sind geringer als bei den herkömmlichen Verfahren,
die explosionsgefährdete Zone ist kleiner als beim herkömmlichen Verfahren.

Weitere vorteilhafte Ausgestaltungen der Erfindung sind in den Unteransprüchen erfaßt.

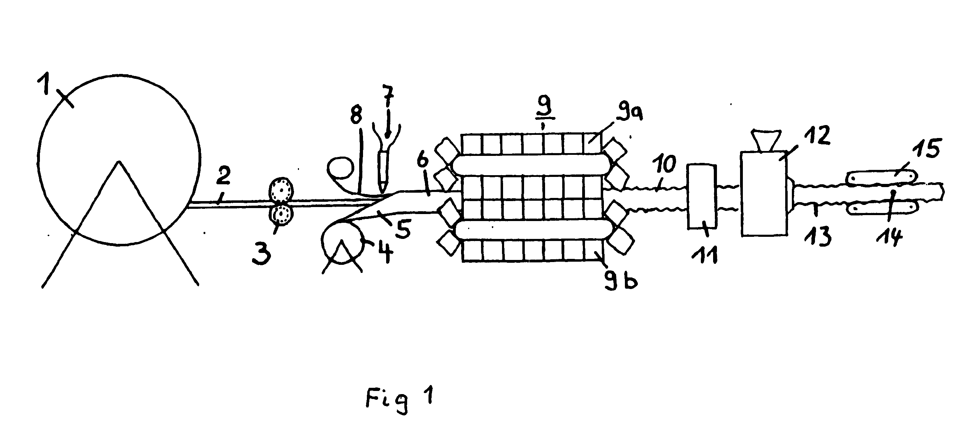

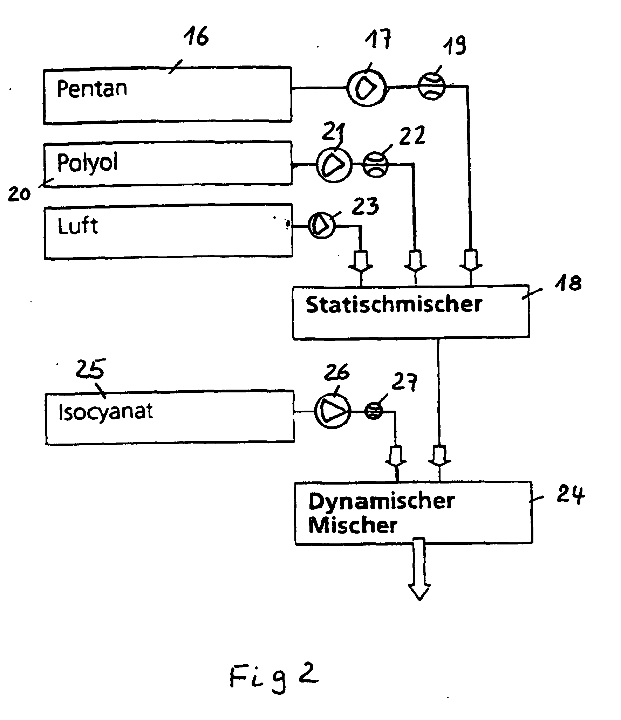

Die Erfindung ist anhand der in den Figuren 1 und 2 schematisch dargestellten Ausführungsbeispiele näher erläutert.

Die Figur 1 zeigt eine seitliche Ansicht einer Vorrichtung zur Herstellung wärmeisolierter Leitungsrohre. Figur 2 zeigt das Schema der Schaumvorbereitung.

Von einer Vorratstrommel 1 wird kontinuierlich ein Innenrohr 2 abgezogen. Das Innenrohr 2 ist vorzugsweise ein vernetztes Polyethylenrohr, in dessen Wandung eine Schicht aus Polyvinylolkohol eingebettet ist. Das Innenrohr 2 wird durch ein Koliberrollenpaar 3 geführt, dessen Rollen angetrieben sind. Das Kaliberrollenpaor 3 ist in zwei senkrecht aufeinanderstehenden Richtungen quer zur Fertigungsrichtung verschiebbar angeordnet.

Von einer Vorratsspule 4 wird eine Folie 5 aus LLDPE abgezogen und um das Innenrohr 2 konzentrisch zu diesem zu einem Schlitzrohr 6 mit einer verklebten oder verschweißten Längsnaht geformt. In das noch offene Schlitzrohr 6 wird ein aufschdumbares Kunststoffgemisch auf Polyurethanbasis eingebracht. Dafür wird eine Pistole 7 verwendet, aus welcher die miteinander vermischten Komponenten auf die Folie 5 aufgespritzt werden.

In das Schlitzrohr 6 können ggfs. Meldeadern 8 eingeführt werden.

Das geschlossene Rohr wird in ein Formwerkzeug 9 eingeführt, welches aus einer Vielzahl von Formhälften 9a und 9b besteht, die gemeinsam eine "wandernde Form" für das mit der Isolierschicht und der Folie 5 versehene Innenrohr 2 bilden.

Die der Folie 5 zugekehrten Oberflächen der Formhälften 9a und 9b weisen ein Wellenprofil auf, in welches die Folie 5 infolge des Schäumdruckes eingeformt wird. Das aus dem Formwerkzeug 9 austretende Rohr 10 weist deshalb eine gewellte Oberfläche auf.

Das Rohr 10 durchläuft dann eine Röntgenstrahleinrichtung 11, mit deren Hilfe das Rohr 10 kontinuierlich auf eine exakt zentrische Lage des Innenrohres 2 überprüft wird. Im Falle einer Abweichung wird das Kaliberrollenpaar 3 entsprechend verschoben. Auf das Rohr 10 wird dann mittels eines Extruders 12 ein Außenmantel 13 aus Kunststoff extrudiert, der sich unter Einwirkung eines Unterdrucks in die Wellung des Rohres 10 einlegt. Der Außenmantel verklebt dabei aufgrund seiner durch die Extrusion erhaltenen hohen Temperatur mit der Kunststoffolie 5.

Das fertige Rohr 14 kann dann mittels eines Bandabzuges 15 abgezogen und in einer geeigneten Einrichtung zu einem Ringbund geformt werden.

Alternativ wird das Rohr 14 auf eine nicht dargestellte Trommel aufgewickelt.

Die Herstellung des Schaumes wird anhand der Figur 2 näher erläutert.

Die Komponenten Pentan, beispielsweise Cyclopentan, Polyol und Luft werden dosiert in einen Statischmischer eingegeben. Das Pentan wird dabei aus einem Vorratsbehälter 16 über eine Dreikolbenmembranpumpe 17 dem Statischmischer 18 zugeleitet. Die Dreikolbenmembranpumpe 17 gewährleistet eine Austragsleitung von 0,003 g/sec. bis 4,4 g/sec. mit einer Genauigkeit von 0,5 %. Zur Überprüfung wird ein Massedurchflußmessgerdt 19 eingesetzt. Das Polyol wird aus einem Vorratstank 20 mittels einer Zahnradpumpe 21 gefördert, wobei die Polyolmenge überein Massedurchflußmeßgerät 22 geregelt wird.

Die Luft wird über einem Druckerhöher zu einem thermischen Masseregler 23 gefördert, welcher die Luft in einer Menge von 0,5 bis 20 nl/h dosiert.

Die in dem Statischmischer 18 vorgemischten Komponenten werden einem unmittelbar hinter dem Statischmischer 18 angeordneten dynamischen Mischer 24 zugeführt. Durch die unmittelbare Nachbarschaft von Statischmischer 18 und dynamischem Mischer 24 wird ein Abscheiden der Komponenten d. h. ein Entmischen der Komponenten vermieden.

Die isocyanatkomponente wird aus einem Vorratsbehälter 25 mittels einer Pumpe 26 und einem Massedurchflußregler 27 in den dynamischen Mischer 24 eingebracht und dort mit den vorgemischten Komponenten Polyol, Pentan und Luft zu einem hochwertigen und sehr homogenen Schaum verarbeitet, der kontinuierlich mittels der Spritzpistole 7 in den Ringspalt zwischen dem Innenrohr 2 und der Folie 5 bzw. dem Außenrohr 13 eingebracht wird.

## Patentansprüche

1. Verfahren zur Herstellung eines wärmeisolierten Leitungsrohres bestehend aus einem oder mehreren Innenrohren (2), einem im Abstand zu dem Innenrohr (2) konzentrisch angeordneten Außenrohr (13) und einer den Ringspalt zwischen Innenrohr (2) und Außenrohr (13) ausfüllenden Wärmedämmschicht auf der Basis von Polyurethan- oder Polyisocyanuratschaum, bei dem das Innenrohr (2) in kontinuierlicher Arbeitsweise von dem Außenrohr (13) umhüllt wird und der aufschäumbare Kunststoff in den Ringspalt eingebracht wird, **dadurch gekennzeichnet, daß** Polyol, ein Treibmittel auf der Basis von Pentan und Luft einem Statischmischer (18) zugeführt werden und dort vermischt werden, und dieses Gemisch mit dem Isocyanat in einem dynamischen Mischer (24) vermischt wird.

2. Verfahren nach Anspruch 1, **dadurch gekennzeichnet, daß** das Treibmittel Cyclopentan ist.

3. Verfahren noch Anspruch 1 oder 2, **dadurch gekennzeichnet, daß** das flüssige Pentan mittels einer pneumatischen Pumpe über eine Sicherheitsleitung von einem Vorratstank (16) zu einer Dreikolbenmembranpumpe (17) gefördert und von der Dreikolbenmembranpumpe (17) in den Statischmischer (18) gefördert wird.

4. Verfahren nach Anspruch 3, **dadurch gekennzeichnet, daß** das Pentan mittels der Dreikolbenmembranpumpe (17) über einen Schlauch in den Statischmischer (18) gefördert wird.

5. Verfahren nach einem der Ansprüche 1 bis 4, **dadurch gekennzeichnet, daß** das aus der Polyolkomponente und dem Pentan und der Luft bestehende Gemisch sowie die Isocyanatkomponente mittels Zahnradpumpen dem dynamischen Mischer (24) zugeführt werden.

## Claims

1. Method to manufacture a thermally-insulated conduit consisting of one or more inner pipes (2), a concentrically arranged outer pipe (13) at a distance from the inner pipe (2), and a thermal insulation layer based on polyurethane or polyisocyanurate foam filling the annular gap between the inner pipe (2) and the other pipe (13), whereby the inner pipe (2) is continuously encased by the outer pipe (13), and the foaming plastic is introduced into the annular gap, **characterized in that** the polyol, a pentane-based propellant and air are fed to a static mixer (18) where they are mixed, and this mixture is mixed with the isocyanate in a dynamic mixer (24).

2. Method according to claim 1, **characterized in that** the propellant is cyclopentane.

3. Method according to claim 1 or 2, **characterized in that** the liquid pentane is fed from a supply tank (16) with a pneumatic pump via a safety line to a three-piston membrane pump (17) and conveyed from the three-piston membrane pump (17) to the static mixer (18).

4. Method according to claim 3, **characterized in that** the pentane is fed by the three-piston membrane pump (17) via a hose to the static mixer (18).

5. Method according to claims 1 - 4, **characterized in that** the mixture consisting of the polyol component and pentane and air is fed along with the isocyanate component by a geared pump to the dynamic mixer (24).

## Revendications

1. Procédé de fabrication d'un tuyau thermo-isolé composé d'un ou plusieurs tubes internes (2), d'un tube externe (13), disposé concentriquement à distance du tube interne (2), et d'une couche thermo-isolante remplissant la fente annulaire entre le tube interne (2) et le tube externe (13), à base de mousse de polyuréthane ou de polyisocyanurate, dans lequel le tube interne (2) est entouré par le tube externe (13) en mode continu et la matière synthétique pouvant être soumise à un moussage est introduite dans la fente annulaire, **caractérisé en ce que** du polyol, un agent expansif réalisé sur la base de pentane et d'air, est amené dans un mélangeur statique (18) pour y être mélangé, et **en ce que** ce mélange est mélangé à l'isocyanate dans un mélangeur dynamique (24)

2. Procédé selon la revendication 1, **caractérisé en ce que** l'agent expansif est du cyclopentane.

3. Procédé selon la revendication 1 ou 2, **caractérisé en ce que** le pentane liquide est transporté à l'aide d'une pompe pneumatique depuis un réservoir (16) jusqu'à une pompe à membrane à trois pistons (17) via une conduite de sécurité et est amené dans le mélangeur statique (18) depuis la pompe à membrane à trois pistons (17).

4. Procédé selon la revendication 3, **caractérisé en ce que** le pentane est transporté dans le mélangeur statique (18) à l'aide d'une pompe à membrane à trois pistons (17), via un flexible.

5. Procédé selon l'une quelconque des revendications 1 à 4, **caractérisé en ce que** le mélange composé de composants de polyol, de pentane et d'air, de même que les composants d'isocyanate, sont amenés au mélangeur dynamique (24) à l'aide de pompes à engrenages.
